(19) Europäisches Patentamt

European Patent Office

Office européen des brevets

(11) Publication number: **0 469 258 A1**

## (12) EUROPEAN PATENT APPLICATION

(21) Application number: **91108139.6**

(22) Date of filing: **21.05.91**

(51) Int. Cl.5: **G01J 5/60, F23M 11/04**

(30) Priority: **01.06.90 IT 1247090**

(43) Date of publication of application:
**05.02.92 Bulletin 92/06**

(84) Designated Contracting States:
**CH DE FR GB LI NL SE**

(71) Applicant: **ANSALDO S.p.A.**
**Piazza Carignano 2**
**I-16128 Genova(IT)**

Applicant: **ENEA COMITATO NAZIONALE PER LA RICERCA E PER LO SVILUPPO DEL L'ENERGIA NUCLEARE E DELLE ENERGIE**

**ALTERNATIVE**
**Viale Regina Margherita 125**
**I-00198 Roma(IT)**

(72) Inventor: **The designation of the inventor has not yet been filed**

(74) Representative: **De Nova, Roberto et al**
**c/o JACOBACCI CASETTA & PERANI Via Visconti di Modrone, 7**
**I-20122 Milano(IT)**

(54) **A device for three-dimensionally mapping the temperature of a flame.**

(57) The subject-matter of this invention is a device for three-dimensionally mapping the temperature of a flame. The device of this invention comprises:
(a) a color TV camera (10) for taking a picture of a flame to be mapped, adapted togenerate a signal indicative of thepicture chromatic components, optionally through a decoder (12);
(b) a control unit (22) associated with a functional component (22.1) adapted to generate, from the picture picked up by the TV camera, a vector indicative of the picture temperatures by the application of two-color pyrometry.

Fig 3

EP 0 469 258 A1

The subject-matter of this invention is a device for mapping three-dimensionally a flame, and particularly for mapping one or more flames from the burners of a boiler.

Industrial processes are controlled according to parameters of an omni-comprehensive nature (power output, pressure, etc.). There may exist system conditions capable of yielding the same quantities of interest which optimize at one time the system stresses, or alternatively some other ancillary parameters such as, in the instance of boilers, the release of pollutants. The studies carried out on the 3D-map (three-dimensional mapping) method fit in this line of technological development directed to a more complete knowledge and/or control of the parameters of interest in the operation of a boiler.

Currently foreseeable applications for a flame-characterizing system articulate about two major points, a first one directed to the study, development, and aid to the design and installation of burners, the second mainly directed to the operation of plants and the ability to also follow their evolution.

Accordingly, results will be required which afford a high degree of detail for the combustion designer or technician to best meet the demands from the first line of users.

To meet the demands from the second group of users one will tend instead to bring out the least number of significant data, such as the maximum temperatures or the volume of the affected areas by temperatures in excess of a predetermined limit, or statistical parameters giving an idea of the flame stability.

The main foreseeable applications may be liquid fuel-fired thermoelectric power plants.

An interest is likely to also exist in such other cases as MHD processes, industrial furnaces (metallurgy), and probably gas turbines as well.

In particular, two major lines of applications can be recognized:

off-line thermal mapping and non-thermal measurements; and

continuous real-time thermalmapping while the boiler is in operation.

The object of this invention is to provide such a thermal mapping of the flame by imaging it through at least one digitalized TV camera and having the picture processed by a control unit.

Along the first of the above-noted lines, the image remote detection and digital processing system is configured as an investigation instrument to be used from the study stage to the operating one. During the study stage, this may assist in thermal and fluid-dynamic investigation work at prototype stage to develop burners of novel design. During the installation stage, it may assist in tuning up the burners in an optimum manner while testing. Finally, in operation, it can store pictures and/or suitably averaged temperature patterns and compare them to similar information to be regarded as signatures proper of the plant.

Processing enables,

thermal mapping;

displaying and bringing out the turbulent motions of the flame.

Also provided is a search feature for any empyrical correlations of the characteristics to be extracted from the picture with the amount of NOx generated by the flame, for the purpose of developing a further investigation instrument and optimizing both the design and the adjustment of the burners versus pollutant emission.

Finally, the second line is directed to provide an operator with indications about the combustion pattern and the flame quality from the various burners. In perspective, this may be seen as a first step toward optimum control of the plant if associated with a differentiated control of the individual burners or sets of burners.

Listed herein below are the physical principles underlying the operation of the inventive device.

The optical methods of detecting the flame temperature are:

single-color pyrometry;

two-color pyrometry.

With the former Stefan-Boltzmann's law is utilized which establishes a link between the radiating energy (indicated at W) from a body and its temperature (indicated at T), i.e.:

$$W = \sigma_\epsilon T^4$$

where $\sigma$ is Stefan-Boltzmann constant, and $\epsilon$ is the body emissivity.

Single-color pyrometry is substantially inapplicable to flames because their emissivity is not known and is, anyhow, bound to vary between spots and over time. It has been ascertained experimentally that flames obtained by burning naphtha and fuel oil behave, from the standpoint of light emission, as grey bodies with emissivity according to Planck's law, with the exception of diversions into the blue most likely associated with chemical reactions.

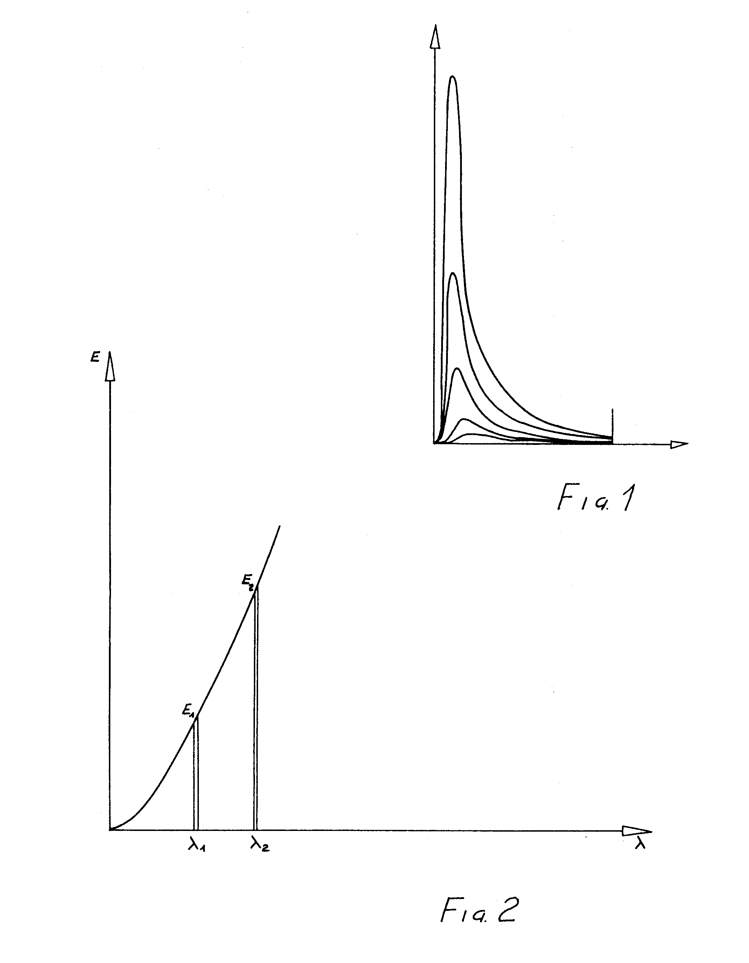

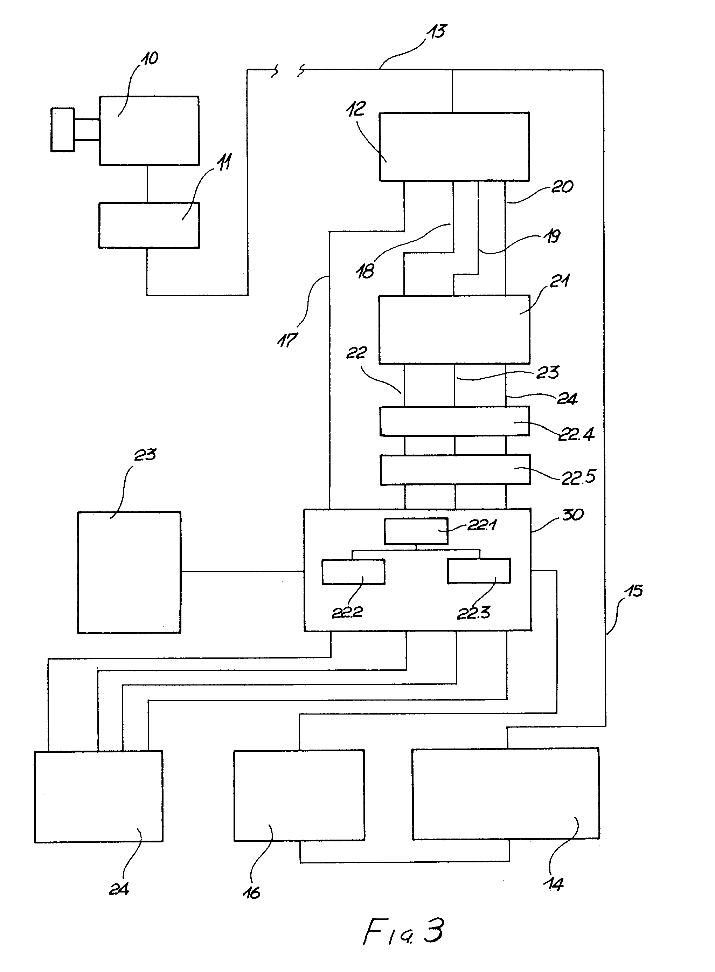

Two-color pyrometry consists of detecting brilliance at two discrete wavelengths. Assuming emissivity to be unrelated to wavelength, temperature can be obtained univocally from the ratio of the brilliancies at the two wavelengths, as shown diagramatically in Figures 1 and 2.

Starting with the well-known Planck's relation $E\lambda = \epsilon^* (C1/(\lambda^5))^*(1/(e^{(C2/\lambda T)}-1)$

where:

$E\lambda$ = light emission
$\epsilon$ = absorption 1/m
$\lambda$ = wavelength $\mu$m
$C1$ = $3.745 * 10^{-16}$ W*m$^2$
$C2$ = $1.4338 * 10^{-2}$ °K*m
$T$ = temperature °K

Calculating for two discrete wavelengths $\lambda1$, $\lambda2$ (wherein absorption and temperature are assumed to be constant) and neglecting the term (- 1), temperature is easily obtained:

$$E\lambda_1 = \mathcal{E}\, \frac{C_1}{\lambda_1^5} \cdot \frac{1}{e^{(C_2/\lambda_1 T)} - 1}$$

$$E\lambda_2 = \mathcal{E}\, \frac{c_1}{\lambda_1^5} \cdot \frac{1}{e^{(C_2/\lambda_1 T)} - 1}$$

$$\frac{E\lambda_1}{E\lambda_2} = \frac{\lambda_2^5}{\lambda_1^5} \cdot \frac{e^{(C_2/\lambda_2 T)} - 1}{e^{(C_2/\lambda_1 T)} - 1} \quad =====>$$

$$\ln\left(\frac{E\lambda_1}{E\lambda_2}\right) = \ln\left(\frac{\lambda_2^5}{\lambda_1^5}\right) + \frac{C_2}{T} \cdot \left(\frac{1}{\lambda_2} - \frac{1}{\lambda_1}\right)$$

$$T = \frac{C_2 \cdot \left(\frac{1}{\lambda_2} - \frac{1}{\lambda_1}\right)}{\ln\left(\frac{E\lambda_1}{E\lambda_2} \cdot \frac{\lambda_1^5}{\lambda_2^5}\right)}$$

The range of wavelengths wherein the flame is an at least approximately grey body corresponds to the visible band.

Accordingly, it becomes possible to use standard color Tv cameras, using for pyrometry just the red and green channels because the blu light emission from flames is weak and mainly due to chemical phenomena.

A measurement taken with this technique has, therefore, two strong points because,

it is unrelated to the absolute brilliance values;

it requires no knowledge of the flame emissivity.

The subject-matter of this invention is a device which, based on the above-discussed physical principles, can provide three-dimensional mapping of one or more flames.

In particular, the object of the claimed device is to acquire data, that is to image flames, for processing basically as regards,

time averages,

calculating temperatures in the various flame areas,

picking up quantities of interest for characterizing the flames (local contrast, brilliance gradients), filtering.

The device according to the invention comprises essentially a color TV camera, a suitable number of functional components for image acquisition and processing, a calculator for handling the collected information, a mass memory for storing them, and at least one screen for displaying the commands and the acquired images.

The features of the invention are summarized and schematized in the claims; the subject-matters and advantages of the same will be apparent, moreover, from the following description covering embodiments selected by way of example only with particular reference to the accompanying drawing sheets, where:

Figure 1 shows the emission spectra of a flame at various temperatures;

Figure 2 is an enlarged picture of the upward leg of one of them;

Figure 3 is a block diagram of the claimed device;

Figure 4 shows a possible setting of the TV camera of the claimed device for mapping the temperatures of the flames from the burners of a combustion chamber;

Figure 5 shows four successive pictures of that same flame from the TV camera;

Figure 6 shows the average of a suitable number of successive pictures of the type of those shown in the preceding Figure with a graph of temperature (shown as a dash line) related to that section of the flame which corresponds to the position of the base line of the graph;

Figure 7 shows the false color output of thermal mapping of the flame;

Figure 8 shows the same successive series of pictures as in Figure 5, wherein using false colors, the flame thermal gradients are depicted.

Figures 1 and 2 have been already described in the introductory part of the specification.

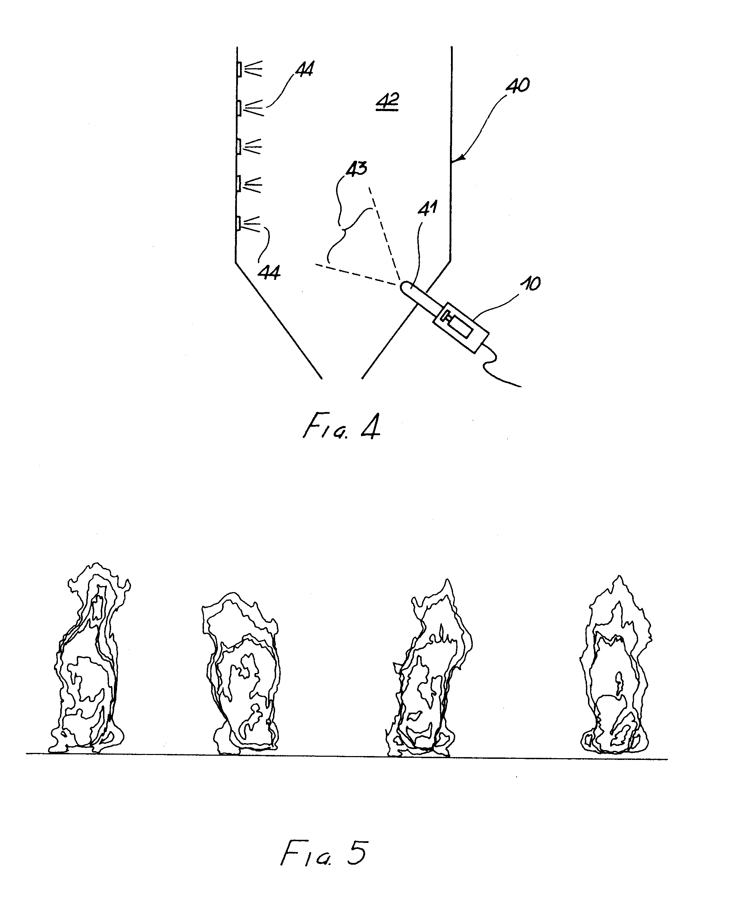

With particular reference to Figure 3 and following Figures, shown at 10 is a TV camera of the CCD color type, and indicated at 11 is its power supply.

Indicated at 12 is a PAL decoder which receives the TV camera signal through the coaxial cable 13 which is also supplied, in parallel, to the video recorder 14 through the cable 15.

The video recorder 14 serves the function of providing different successive displays and processings of the same pictures.

Indicated at 16 is a first monitor connected to the output of the video recorder 14.

The PAL decoder outputs four signals 17, 18, 19 and 20, of which the first is a synchronization signal, and the three others contain the picture as split into the three chromatic components, Red, Green and Blue.

The signals 18, 19 and 20 are amplified by the amplifier 21 and converted into the signals 22, 23 and 24 which, in combination with the synchro signal 17, are supplied to a control unit 30 operative to serve the following functions:

(a) controlling a first functional component (22.1) adapted to generate, from the picture taken by means of the TV camera, a significant vector of the picture temperature, using the principles of two-color pyrometry;

(b) controlling a second functional component (22.2) adapted to convert said temperature vector into a thermal map, that is a false color picture;

(c) controlling a third functional component (22.3) adapted to generate a vector indicative of the picture brilliance gradients;

(d) transferring some or all of said thermal maps to an optical disk 23;

(e) displaying said thermal maps on a second monitor 24, on command from a console, not shown in detail.

In addition, the device includes a fourth functional component (22.4) adapted to average a suitable number of successive pictures from the TV camera, and a fifth functional element (22.5) adapted to filter the pictures from the TV camera to bring out eddies, turbolences, and in general local brilliance contrasts.

It should be noted that the term "thermal mapping" means a digital image whose false colors are tied to the flame temperature as detected by means of the TV camera.

4

The claimed device can display, through the first monitor 16, either the flame images or those recorded on 14.

The second monitor 24 can display instead the digitalized images, which we are referring to as thermal maps and which may be passed by the decoder 12 and the control unit 30, and accordingly, can be compared with those displayed on the first monitor 14.

On the second monitor 24 previous mappings already stored on the optical disk 23 may be called, of course, additionally to the aforesaid images directly supplied by the TV camera.

As for the signals 22, 23 and 24, it should be pointed out that, to enable the use of two-color pyrometry, only two of them should be used.

The signal left out would be in general the signal indicative of BLUE whose values are often affected by chemical phenomena occurring inside the flame.

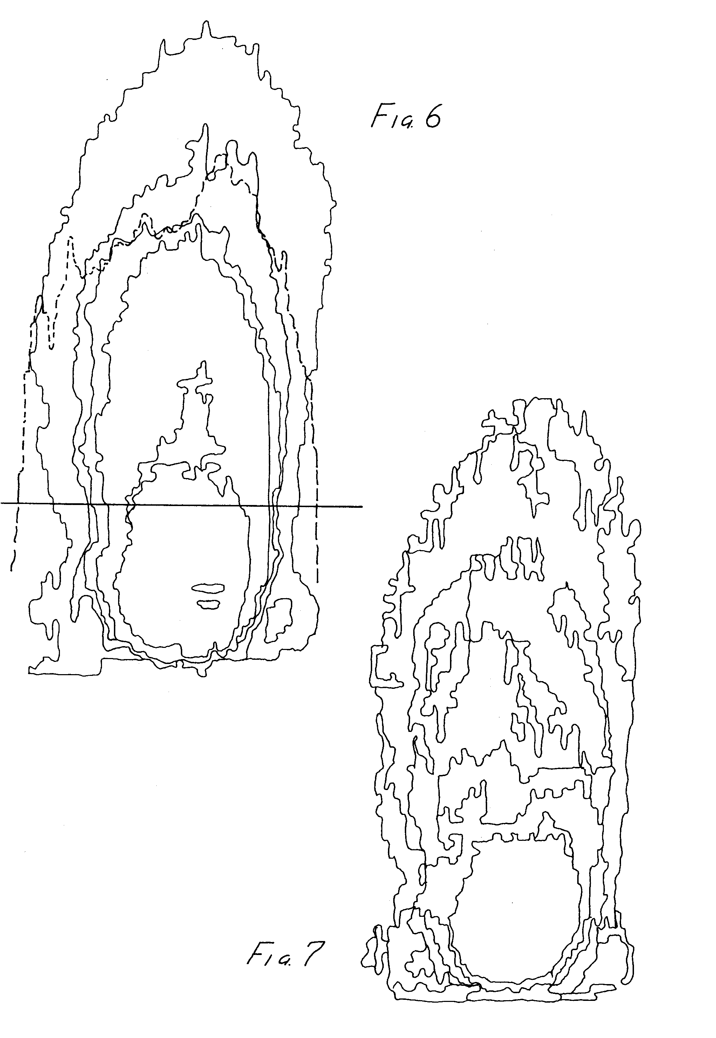

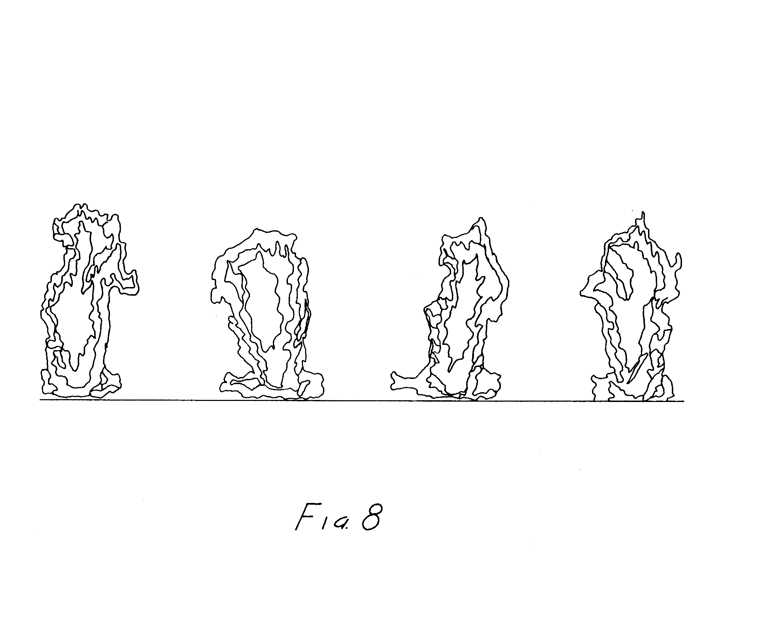

In actual practice, as shown in Figure 4, the TV camera would be placed at a pyrex glass window 41 provided in the wall 40 of the combustion chamber 42.

The field range 43 of the TV camera 10 will be such as to encompass one or more of the burners 44 which face into the chamber 42.

By having at least two cameras installed and suitably arranged and aimed, it thus becomes possible to also carry out a differentiated thermal mapping of any cross-section of each individual flame in the combustion chamber.

The three-dimensional mapping device of this invention presently shows to be a useful combustion troubleshooting instrument with enough flexibility to appreciably expand the available functions and performance.

This device lends itself for the use of tomographic techniques of re-constructing temperature in order to improve and refine the system performance in specially noisy environments (smoke, soot, various gases, etc.) for which it is intended;

in addition, this device can replace all of the current flame detectors; heretofore, every burner in the boiler had to be provided with a detector which could detect the presence of a flame in a reliable manner; since operational boilers of medium power, around a few hundred megawatts, come equipped with several tens burners, the substitution of said detectors brings about a significant reduction in the troubleshooting and control system costs;

the use of fiber optics objectives affords a view of the combustion chamber from several angles at one time by means of a single TV camera, in the event of serious viewing problems from partly overlapping flames;

this device also lends itself for boiler setting applications, by closing it into a loop on the burner adjuster; the device becomes then a measurement channel connected in a multi-variable closed-loop adjustment system.

While for clarity of description this invention has been based on what has been described and illustrated in the foregoing by way of example only, numerous modifications and variations may be introduced in its implementation; such modifications and variations are intended to stand on the claims which follow.

## Claims

1. A device for three-dimensionally mapping the temperature of a flame, characterized in that it comprises:

   (a) a color Tv camera (10) for taking a picture of the flame to be mapped adapted to generate a signal indicative of the picture chromatic components, optionally through a decoder (12);

   (b) a control unit (22) associated with a functional component (22.1) adapted to generate, from the image picked up by the TV camera, a vector indicative of the picture temperature by application of two-color pyrometry.

2. A device for three-dimensionally mapping the temperature of a flame according to the preceding claim, characterized in that it comprises a second functional component (22.2) adapted to convert said temperature vector into a thermal map, i.e. to image in false colors, according to a predetermined coding.

3. A device for three-dimensionally mapping the temperature of a flame according to the preceding claims, characterized in that it comprises at least one monitor (16,24) for displaying the direct image from the Tv camera and the corresponding mapping provided by the calculator.

4. A device for three-dimensionally mapping the temperature of a flame according to one or more of the preceding claims, characterized in that it comprises a third functional component (22.3) adapted to generate a vector indicative of the picture brilliance gradients.

5. A device for three-dimensionally mapping the temperature of a flame according to the preceding claims, characterized in that it comprises a fourth functional component (22.4) adapted to average a suitable number of successive pictures from the TV camera.

6. A device for three-dimensionally mapping the temperature of a flame according to one or more of the preceding claims, characterized in thatit comprises a fifth functional component (22.5) adapted to filter the picture from the TV camera to bring out eddies, turbolences, and in general local brilliance contrasts.

7. A device for three-dimensionally mapping the temperature of a flame according to one or more of the preceding claims, characterized in that it comprises two monitors (16,24) for displaying, on the first, the direct pictures from the TV camera, and on the second, the corresponding mapping provided by the calculator.

8. A device for three-dimensionally mapping the temperature of a flame according to one or more of the preceding claims, characterized in that it comprises:
a video recorder (14) for collecting the direct pictures from the TV camera (10), and preferably
a digital recorder (23) as well.

9. A device for three-dimensionally mapping the temperature of a flame according to one or more of the preceding claims, characterized in that said TV camera (10) is a TV camera of the CCD type, wherein connected between said decoder (12) and said calculator (22) is a signal amplifier (21).

10. A device for three-dimensionally mapping the temperature of a flame according to the preceding claims, substantially made and implaced as herein described and illustrated.

Fig. 1

Fig. 2

Fig. 3

Fig. 4

Fig. 5

Fig. 6

Fig. 7

*Fig 8*

## DOCUMENTS CONSIDERED TO BE RELEVANT

EP 91108139.6

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, unexamined applications, P field, vol. 10, no. 86, April 4, 1986 THE PATENT OFFICE JAPANESE GOVERNMENT page 158 P 443 * Kokai-no. 60-224 034 (HITACHI SEISAKUSHO) * | 1-3, 8-10 | G 01 J 5/60 F 23 M 11/04 |
| X | PATENT ABSTRACTS OF JAPAN, unexamined applications, M field, vol. 13, no. 206, May 16, 1989 THE PATENT OFFICE JAPANESE GOVERNMENT page 29 M 826 * Kokai-no. 1-28 413 (MITSUBISHI) * | 1-3,9, 10 | |
| X | PATENT ABSTRACTS OF JAPAN, unexamined applications, M field, vol. 10, no. 191, July 4, 1986 THE PATENT OFFICE JAPANESE GOVERNMENT page 123 M 495 * Kokai-no. 61-36 616 (KAWASAKI) * | 1-3,9, 10 | TECHNICAL FIELDS SEARCHED (Int. Cl.5)  F 23 M F 23 N G 01 J |
| X | DE - C2 - 3 515 209 (HITACHI) * Claims 1-17; fig. 1,2,4b, 6-13 * | 1-6,9, 10 | |
| A | | 7,8 | |

The present search report has been drawn up for all claims

| Place of search | Date of completion of the search | Examiner |
|---|---|---|
| VIENNA | 08-08-1991 | BAUER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)